# EUROPEAN PATENT APPLICATION

(11) **EP 4 765 840 A1**
(43) Date of publication of application: **24.06.2026**
(21) Application number: 24943268.3
(22) Date of filing: 30.12.2024
(51) Int. Cl.: H04N 23/53, H04N 23/50

(54) **VIDEO CAMERA**

(30) Priority: 14.06.2024 CN 202410769429; 14.06.2024 CN 202410769420
(71) Applicant: Raytron Technology Co., Ltd., Yantai, Shandong 264006 (CN)
(72) Inventor: ZHANG, Zhonggang, Yantai, Shandong 264006 (CN); JING, Sai, Yantai, Shandong 264006 (CN); LIU, Jigang, Yantai, Shandong 264006 (CN)
(74) Representative: Studio Torta S.p.A.
(86) International application number: PCT/CN2024/143732
(87) International publication number: WO 2025/256116

(57) **Abstract**

A video camera, comprising a handle, a display, and an imaging module. The handle is used for a user to hold and use. The display is arranged on the handle and used for image display. The imaging module is detachably connected to the handle and used for image acquisition. When the imaging module is mounted on the handle, an electrical connection between the imaging module and the display is achieved, so that an image acquired by the imaging module is transmitted to the display for display. By applying the video camera, the imaging module can be entirely detached from the handle, so that a user can conveniently replace imaging modules of different specifications or models according to photographing requirements; and the replaced imaging module is electrically connected to the display, so that an image acquired by the imaging module can be transmitted to the display for display, thereby facilitating observation by the user. In addition, when the imaging module fails and needs to be repaired or upgraded, the imaging module can also be easily disassembled, assembled, and replaced.

## Description

The present application claims the priorities to the following two Chinese patent applications, both of which are incorporated herein by reference:
1) Chinese Patent Application No. 202410769429.0, titled "CAMERA", filed with the China National Intellectual Property Administration on June 14, 2024; and
2) Chinese Patent Application No. 202410769420.X, titled "CAMERA AND IMAGING MODULE THEREOF", filed with the China National Intellectual Property Administration on June 14, 2024.

### FIELD

The present application relates to the technical field of camera equipment, and in particular to a camera.

### BACKGROUND

The camera is widely used in people's work and life. The principle of the digital camera mainly involves the conversion and transmission of optical, electrical, and digital signals. That is, an optical signal is converted into an electric current through a photosensitive element, and then the analog electrical signal is converted into a digital signal. The digital signal is processed and filtered by an appropriate chip, yielding information that enables image reconstruction. As a type of digital camera, the infrared camera can capture infrared spectral images that are invisible to the human eye. It has wide-ranging applications and facilitates people's work and life.

In the present application, it is found that there are at least the following issues in the related art. In order to meet various shooting needs, the camera sometimes needs to be equipped with imaging modules in various specifications or models, which requires easy disassembly and replacement of imaging modules in the camera. Moreover, when the imaging module malfunctions and requires repair or upgrade, it also needs to be disassembled and replaced. However, in order to achieve the reliability of the overall assembly, the imaging module of the existing camera is usually directly fixed to the camera body and cannot be disassembled, resulting in poor replaceability and upgradability. Further, when connecting the imaging module to the camera body, not only is a physical connection needed, but an electrical connection is also required therebetween for signal transmission and/or charging. However, ensuring both reliable physical and electrical connections usually leads to inconvenient operations.

### SUMMARY

In view of this, an object of the present application is to provide a camera. The structural design of the camera can effectively address the issue of poor replaceability and upgradability of the imaging module and the issue of inconvenient installation of the imaging module.

In order to achieve the object above, the following technical solutions are provided in the present application.

A camera includes a handle, a display, and an imaging module.

The handle is configured for a user to grip.

The display is arranged on the handle and configured to display an image.

The imaging module is detachably connected to the handle and is configured to capture an image.

When the imaging module is mounted to the handle, the imaging module is electrically connected to the display to allow the image captured by the imaging module to be transmitted to the display for displaying.

When using the camera provided in the present application, the imaging module is detachably connected to the handle, that is, the imaging module can be disassembled as a whole from the handle, so that the user can easily replace with imaging modules of different specifications or models according to the shooting needs. Moreover, the newly installed imaging module is electrically connected to the display, so that the image captured by the imaging module can be transmitted to the display for displaying, making it convenient for the user to observe. In addition, when the imaging module malfunctions and requires repair or upgrade, the imaging module can also be easily disassembled and replaced.

### BRIEF DESCRIPTION OF THE DRAWINGS

For more clearly illustrating embodiments of the present application or the technical solutions in the related art, the accompany drawings for description of the embodiments or the related art will be briefly described hereinafter. Apparently, the drawings in the following description are only some examples of the present application, and for those skilled in the art, other drawings may be obtained based on these drawings without any creative efforts.
FIG. 1 is a schematic structural view of a camera according to an embodiment of the present application;
FIG. 2 is a schematic view of the camera with an imaging module being disassembled;
FIG. 3 is a schematic structural view of an engagement groove on a handle;
FIG. 4 is a schematic structural view of the imaging module according to an embodiment of the present application;
FIG. 5 is a schematic exploded structural view of the imaging module;
FIG. 6 is a schematic structural view of an imaging core according to an embodiment of the present application;
FIG. 7 is a schematic structural view of a mounting assembly of the camera according to an embodiment of the present application;
FIG. 8 is a schematic exploded view of the mounting assembly;
FIG. 9 is a schematic structural view of a first mounting member;
FIG. 10 is a schematic view of the first mounting member from another perspective;
FIG. 11 is a schematic structural view of a second mounting member;
FIG. 12 is a schematic view of the second mounting member from another perspective;
FIG. 13 is a schematic structural view of a first connecting disc;
FIG. 14 is a schematic structural view of a base;
FIG. 15 is a schematic exploded structural view of the base;
FIG. 16 is a schematic view of the base from another perspective;
FIG. 17 is a schematic view showing the cooperation of the first mounting member, the second mounting member, and a cover plate;
FIG. 18 is a schematic view of FIG. 17 from another perspective;
FIG. 19 is a schematic cross-sectional view showing the cooperation of the first mounting member, the second mounting member, and the cover plate; and
FIG. 20 is a schematic structural view of the cover plate.

Reference numerals are listed below:
1-imaging module, 2-handle, 3-display, 4-laser indicator;
11-mounting assembly, 12-imaging core, 13-first electrical connector, 14-positioning pin;
111-first mounting member, 112-second mounting member, 113-first connecting disc, 114-cover plate, 115-engagement block, 116-positioning portion, 117-limiting groove, 118-limiting protrusion, 119-cover plate mounting groove, 1121-protruding portion, 1122-bolt hole of protruding portion, 1131-fixing hole, 1132-contact hole, 1141-cover plate body, 1142-cover plate protrusion, 1143-inner side wall of cover plate protrusion, 1144-end face of cover plate body, 1161-positioning bolt hole, 1171 limiting portion, 1172-avoidance portion, 1191-step surface;
121-core body, 122-lens, 123-focusing ring, 124-connecting port, 125-fastening threaded hole;
21-mounting portion, 22-gripping portion, 23-housing, 24-base, 25-second electrical connector, 26-positioning hole, 27-engagement groove, 241-base body, 242-second connecting disc, 243-base fixing hole, 244-mounting fixing hole, 245-base positioning hole, 246-base threaded hole, 271-stop protrusion, 272-end face of second end.

### DETAILED DESCRIPTION OF THE EMBODIMENTS

A camera is provided in an embodiment of the present application, which facilitates the disassembly and replacement of the imaging module.

The technical solutions in the embodiments of the present application will be clearly and completely described in conjunction with the accompanying drawings below. Obviously, the described embodiments are only a part of the embodiments of the present application, not all of them. Based on the embodiments of the present application, all other embodiments obtained by those skilled in the art without creative labor shall fall within the protection scope of the present application.

In the present application, the camera may be an infrared camera, a visible light camera, or a low light camera. Accordingly, the imaging module is specifically an infrared imaging module, a visible light imaging module, or a low light imaging module. When equipped with the infrared imaging module, the camera can be used in low light environments, such as for night use.

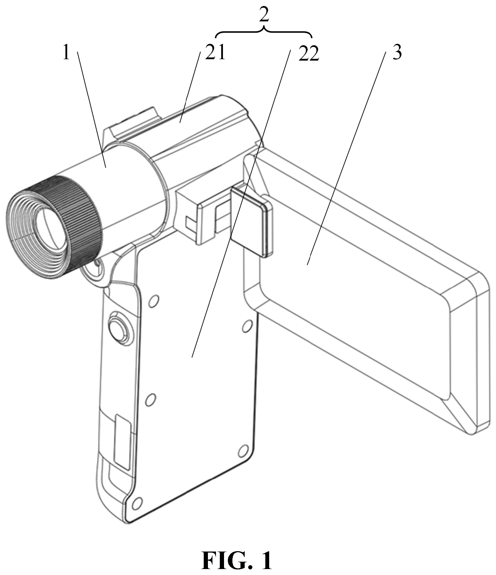

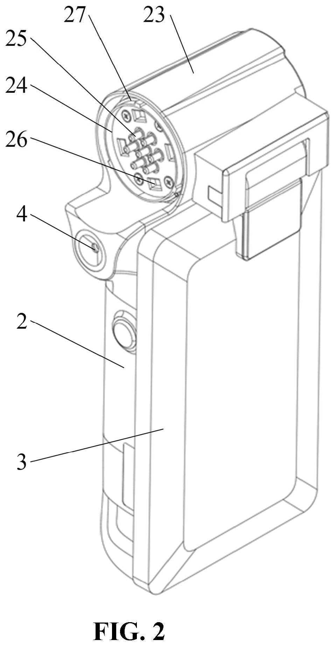

In some embodiments, referring to FIG. 1 and FIG. 2, a camera according to the present application includes a handle 2, a display 3, and an imaging module 1. The handle 2 is for a user to grip and use the camera. That is, the camera is a handheld device that the user can easily hold and use. The shape of the handle 2 can be designed according to the user's gripping requirements. The display 3 is arranged on the handle 2 and is configured to display an image. Specifically, the display 3 is connected to an outer wall of the handle 2. That is, the camera has an external display 3, and the user can choose a suitable position and angle relative to the display 3 according to the observation habits, so that eye fatigue hardly occurs even during long-term use. The imaging module 1 is detachably connected to the handle 2 and is configured to capture an image. When the imaging module 1 is mounted to the handle 2, the imaging module 1 is electrically connected to the display 3, so that the image captured by the imaging module 1 can be transmitted to the display 3 for displaying. It can be understood that the image captured by the imaging module 1 refers to that the light captured by a lens of the imaging module 1 is processed and converted into image data by the imaging module 1. The display 3 obtains the image data and displays the corresponding image. The whole imaging module 1 is detachably connected to the handle 2, so that the imaging module 1 can be disassembled and replaced as a whole according to maintenance needs or the user's shooting needs. When the imaging module 1 is connected to the handle 2, the imaging module 1 is electrically connected to the display 3, so that the image data information of the imaging module 1 can be transmitted to the display 3. Accordingly, when the imaging module 1 is disassembled from the handle 2, the imaging module 1 is electrically disconnected from the display 3. That is, in the present application, the imaging module 1 is physically connected to the handle 2 in a detachable manner, and the imaging module 1 is electrically connected to the display 3 in a detachable manner.

In the camera provided in the present application, the imaging module 1 is detachably connected to the handle 2, and thus the imaging module 1 can be disassembled from the handle 2 as a whole. Therefore, the user can easily replace with imaging modules 1 of various specifications or models according to the shooting needs. The replacement imaging module 1 is electrically connected to the display 3, and thus the image captured by the imaging module 1 can be transmitted to the display 3 for displaying, which facilitates observation by the user. In addition, when the imaging module 1 malfunctions and requires repair or upgrade, the imaging module 1 can also be easily disassembled and replaced.

In some embodiments, a rear end of the imaging module 1 is provided with a connecting portion configured to detachably connect the imaging module 1 to the handle 2. The connecting portion is configured as an engagement portion or a thread, which is configured to engage with the handle 2 so as to achieve the detachable connection through engagement or threaded connection. In an embodiment, the connecting portion is an engagement portion, that is, the imaging module 1 is detachably connected to the handle 2 through the engagement portion. Alternatively, the connecting portion is a thread, that is, the imaging module 1 is connected to the handle 2 through the threaded connection. The detachable connection between the imaging module 1 and the handle 2 is achieved through the engagement portion or the thread, which ensures easy assembly and disassembly and reliable connection.

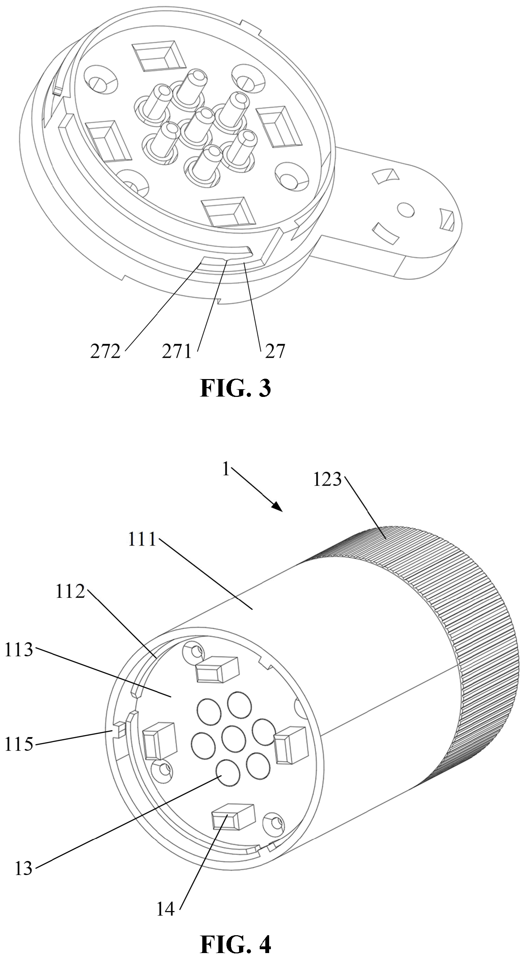

In some embodiments, referring to FIG. 2 and FIG. 4, the imaging module 1 is provided with a first electrical connector 13, and the handle 2 is provided with a second electrical connector 25. The second electrical connector 25 is electrically connected to the display 3. When the imaging module 1 is mounted to the handle 2, the first electrical connector 13 is in electrical contact with the second electrical connector 25, thereby achieving the electrical connection between the imaging module 1 and the display 3. With the first electrical connector 13 of the imaging module 1 and the second electrical connector 25 of the handle 2 that is electrically connected to the display 3, the electrical conduction between the imaging module 1 and the display 3 is achieved via the contact between the first electrical connector 13 and thus the second electrical connector 25. In this way, when the imaging module 1 is disassembled from the handle 2, the first electrical connector 13 and the second electrical connector 25 are no longer in contact and thus are electrically disconnected from each other. That is, by providing the first electrical connector 13 and the second electrical connector 25, it is convenient to establish the electrical conduction between the imaging module 1 and the display 3 in the assembled state, and to disconnect the electrical connection when the imaging module 1 is disassembled. The first electrical connector 13 and the second electrical connector 25 may have forms of, for example, conductive contacts, conductive pogo pins, conductive sheets, etc., which are not specifically limited here. The first electrical connector 13 and the second electrical connector 25 may have the same or different forms, as long as the contact and electrical conduction therebetween can be achieved. The first electrical connector 13 may be directly connected to an imaging core 12 or indirectly connected to the imaging core 12 through a circuit board, a wire, etc. Alternatively, an electrical connection terminal of the imaging core 12 may serve as the first electrical connector 13. The second electrical connector 25 may be directly connected to the display 3 or indirectly connected to the display 3 through a circuit board, a wire, etc. For example, the second electrical connector 25 may be connected to a circuit board in the handle 2 through a ribbon cable. Alternatively, an electrical connection terminal of the display 3 may serve as the second electrical connector 25.

In some embodiments, the connecting portion is rotatable relative to the first electrical connector 13. When the imaging module 1 is located close to the handle 2 and the first electrical connector 13 is in electrical contact with the second electrical connector 25, the first electrical connector 13 and the second electrical connector 25 remain fixed relative to each other, and the connecting portion is configured to rotate relative to the first electrical connector 13 to fix the imaging module 1 to the handle 2.When assembling the imaging module 1 and the handle 2, the imaging module 1 is axially moved close to the handle 2, bringing the first electrical connector 13 into electrical contact with the second electrical connector 25, and the first electrical connector 13 and the second electrical connector 25 can remain relatively fixed in a circumferential direction. Then, since the connecting portion is rotatable relative to the first electrical connector 13, the connecting portion is rotated to be connected to the handle 2 while the first electrical connector 13 does not rotate along with the connecting portion; alternatively, the handle 2 is rotated, and the first electrical connector 13 rotates synchronously with the handle 2 while the connecting portion does not rotate along with the handle 2, that is, the handle 2 is rotated relative to the connecting portion to achieve the connection. When the connecting portion or the handle 2 is rotated as described above, the first electrical connector 13 can maintain a corresponding relationship with the second electrical connector 25 in both cases, that is, when the connecting portion and the handle 2 rotate relative to each other, the first electrical connector 13 remains aligned with the second electrical connector 25 in the circumferential direction. With the arrangement above, the imaging module 1 can be easily connected to the handle 2, and the rotation action does not affect the contact between the first electrical connector 13 and the second electrical connector 25. Therefore, the first electrical connector 13 and the second electrical connector 25 may both have a small size while achieving reliable electrical connection.

In some embodiments, referring to FIG. 2 to FIG. 4, the imaging module 1 is engaged with the handle 2. The engagement connection is convenient for disassembly and assembly without the need for tools. It allows manual disassembly and assembly, and the connection is reliable. Specifically, one of the imaging module 1 and the handle 2 is provided with an engagement groove 27, and the other is provided with an engagement block 115, which can be engaged with the engagement groove 27. The imaging module 1 is detachably connected to the handle 2 through the engagement of the engagement groove 27 and the engagement block 115. That is, the connecting portion of the imaging module 1 is either the engagement block 115 or the engagement groove 27. The shape of the engagement groove 27 matches the shape of the engagement block 115 to ensure a reliable engagement between the engagement block 115 and the engagement groove 27. It can be understood that at least a part of the engagement block 115 and/or at least a part of the engagement groove 27 is elastic, so that the engagement block 115 can be inserted into the engagement groove 27 or released from the engagement groove 27 through the deformation of the engagement block 115 or the engagement groove 27 under external force. After the engagement block 115 is inserted to an engagement position in the engagement groove 27, the deformation of the engagement block 115 and/or the engagement groove 27 automatically recovers, thereby achieving an effective engagement between the engagement block 115 and the engagement groove 27.

In some embodiments, the engagement groove 27 is arranged in a circumferential direction of the imaging module 1 or the handle 2, and a first end of the engagement groove 27 extends to an edge of the imaging module 1 or an edge of the handle 2. The engagement block 115 can be inserted into the engagement groove 27 from the first end and rotate along the engagement groove 27 to a second end of the engagement groove 27 for engagement. In an embodiment, the engagement groove 27 is arranged in the circumferential direction of the imaging module 1. The first end of the engagement groove 27 extends to the edge of the imaging module 1, and the engagement block 115 is arranged on the handle 2. In another embodiment, the engagement groove 27 is arranged in the circumferential direction of the handle 2. The first end of the engagement groove 27 extends to the edge of the handle 2, and the engagement block 115 is arranged on the imaging module 1. With the arrangements above, the imaging module 1 and the handle 2 are connected via a rotational engagement. The engagement block 115 is first inserted into the engagement groove 27 from an edge of the first end of the engagement groove 27. The first end is not used for engagement, which facilitates the insertion of the engagement block 115 and thus facilitates user operation. After the engagement block 115 is inserted into the engagement groove 27, the imaging module 1 or the handle 2 is rotated, that is, the imaging module 1 and the handle 2 rotate relative to each other, and the engagement block 115 rotates along the engagement groove 27 accordingly. During the rotation, the engagement groove 27 provides position limitation and guide to the engagement block 115. When rotating to the second end, the engagement block 115 is engaged with the engagement groove 27. Therefore, compared with the direct axial insertion engagement, the above rotational engagement has a lower requirement for positional precision when inserting the engagement block 115. Therefore, the operation is easy, and the connection between the imaging module 1 and the handle 2 is ensured to be firmer through the rotational engagement.

In some embodiments, at least one of two opposite side walls of the second end of the engagement groove 27 is provided with a stop protrusion 271. A distance between the stop protrusion 271 and an end face 272 of the second end of the engagement groove 27 is the same as a width of the engagement block 115 so as to prevent circumferential displacement of the engagement block 115. It should be noted that the two opposite side walls of the second end refer to two side walls that extend in the circumferential direction and are arranged facing each other. At least one of the two side walls is provided with the stop protrusion 271 that protrudes towards the other of the side walls. The engagement block 115 is configured to slide along the engagement groove 27 until it passes over the stop protrusion 271 and enters the second end. Since the distance between the end face 272 of the second end and the stop protrusion 271 is the same as the width of the engagement block 115, a leading end face of the engagement block 115 in a rotation direction abuts against the end face 272 of the second end of the engagement groove 27, and a trailing end face of the engagement block 115 abuts against a side of the stop protrusion 271, which reliably limits the position of the engagement block 115. That is, the rotation of the engagement block 115 in the circumferential direction along the engagement groove 27 is prevented, and the axial movement of the engagement block 115 is prevented by the position limiting effect of the two opposite side walls of the engagement groove 27. As such, the engagement block 115 is effectively engaged at the second end of the engagement groove 27, thereby achieving a reliable connection between the imaging module 1 and the handle 2. It can be understood that at least a part of the stop protrusion 271 and/or at least a part of the engagement block 115 is elastic, so that the engagement block 115 can pass over the stop protrusion 271 through the deformation of the engagement block 115 or the stop protrusion 271 under external force. After the engagement block 115 passes over the stop protrusion 271, the deformation of the stop protrusion 271 and/or the engagement block 115 automatically recovers, thereby effectively limiting the position of the engagement block 115. By providing the stop protrusion 271 for position limiting, not only can a reliable engagement of the engagement block 115 be achieved, but also a clear operational feedback can be provided when the user rotates the handle 2 or the imaging module 1 to engage the engagement block 115 with the engagement groove 27.

Specifically, the stop protrusion 271 is a part of the side wall of the engagement groove 27, that is, the stop protrusion 271 and the engagement groove 27 are integrally formed, which is easy for forming. Alternatively, the stop protrusion 271 is an elastic protrusion that is slidably mounted on the side wall of the engagement groove 27, and an elastic member in cooperation with the stop protrusion 271 is further provided. When the engagement block 115 rotates along the engagement groove 27 towards the second end, the engagement block 115 can push the stop protrusion 271 to compress the elastic member and retract. When the engagement block 115 rotates to the second end, the action of the engagement block 115 on the stop protrusion 271 is released, and the stop protrusion 271 automatically lifts and recovers under the restoring force of the elastic member, thereby limiting the engagement block 115 at the second end. With the arrangement above, when the user rotates the handle 2 or the imaging module 1 to engage the engagement block 115 with the engagement groove 27, the lifting of the stop protrusion 271 can produce a sound indication, such as a clicking sound, which helps the user to confirm that the imaging module 1 is mounted in place.

In some embodiments, a size of the second end of the engagement groove 27 is smaller than a size of the first end, so that the engagement groove 27 is in interference fit with the engagement block 115. Instead of the above solution of limiting the engagement block 115 through the stop protrusion 271, the size of the second end is configured such that the second end is in interference fit with the engagement block 115, which can also reliably limit the engagement block 115 at the second end, thereby achieving a reliable connection between the imaging module 1 and the handle 2.

In some embodiments, the imaging module 1 is provided with a first electrical connector 13, and the handle is provided with a second electrical connector 25. The specific arrangement of the first electrical connector 13 and the second electrical connector 25 may refer to the relevant embodiments mentioned above. It should be noted that, in order to facilitate the image capture and the user's gripping and observation, the imaging module 1 is preferably detachably arranged at a front end of a top portion of the handle 2, that is, a rear end of the imaging module 1 is detachably connected to the front end of the top portion of the handle 2. In order to achieve better detachable physical and electrical connections, the first electrical connector 13 may be arranged at the rear end of the imaging module 1 and exposed, the second electrical connector 25 may be arranged at the front end of the top portion of the handle and exposed, and a position of the first electrical connector 13 corresponds to a position of the second electrical connector 25. The connecting portion of the imaging module 1 is located at a periphery of the first electrical connector 13, and a connecting structure (threads or the engagement block 115 or the engagement groove 27) of the handle 2 corresponding to the connecting portion is located at a periphery of the second electrical connector 25. The connecting portion of the imaging module 1 is rotatable relative to the first electrical connector 13 of the imaging module 1. As such, when the imaging module 1 is moved close to the handle 2, it is easy to bring the first electrical connector 13 into electrical contact with the second electrical connector 25, thereby achieving the electrical connection between the imaging module 1 and the handle 2. After that, the first electrical connector 13 and the second electrical connector 25 remain fixed relative to each other, and the connecting portion at the periphery of the first electrical connector 13 is rotated to be connected to the corresponding connecting structure of the handle 2, thereby achieving the physical connection between the imaging module 1 and the handle 2.

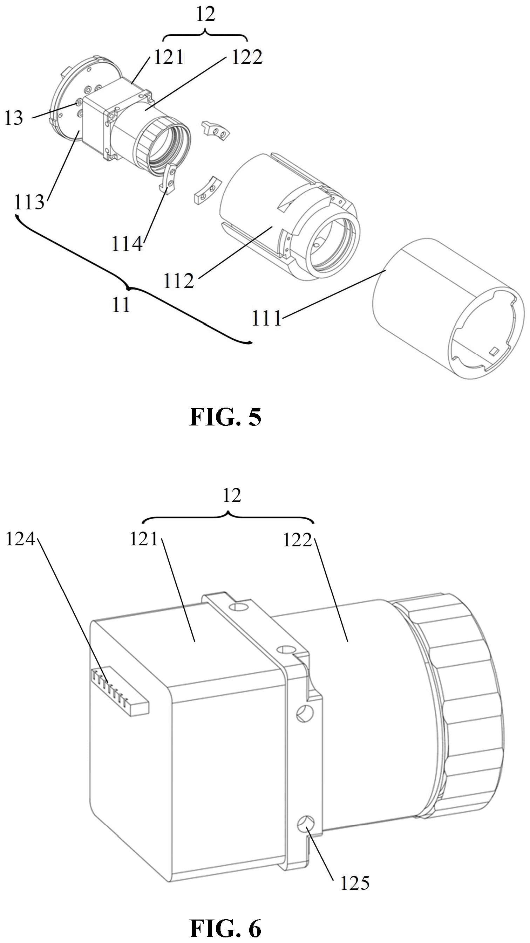

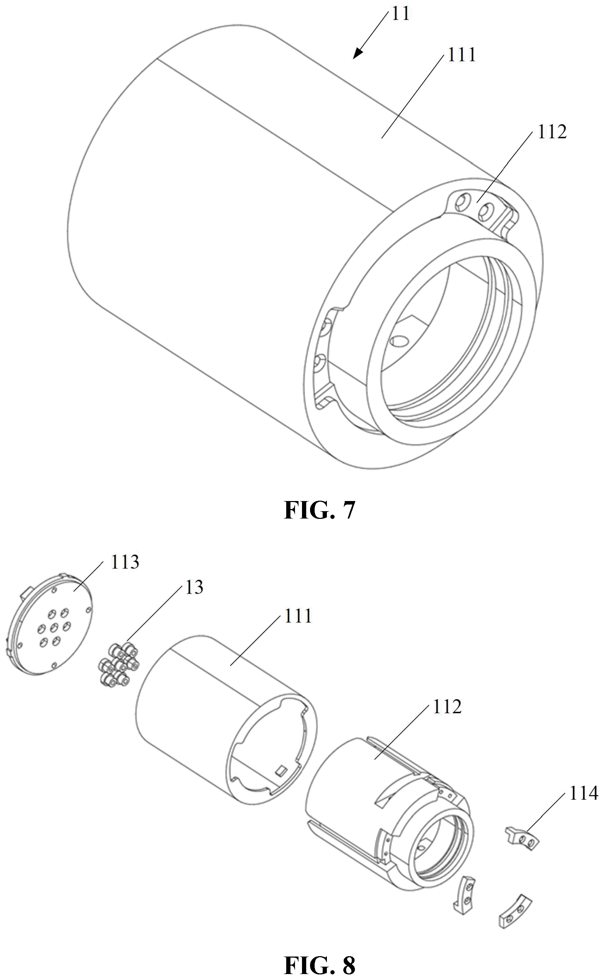

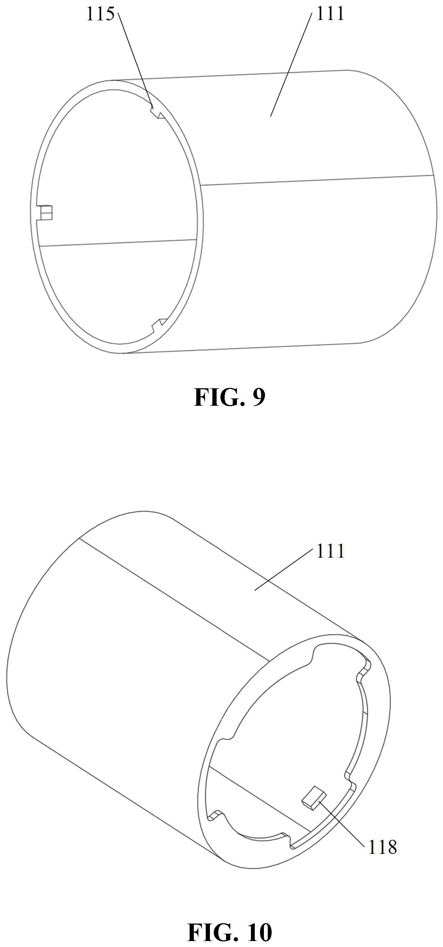

In some embodiments, referring to FIG. 4, FIG. 5, and FIG. 7 to FIG. 10, the imaging module 1 includes an imaging core 12 and a first mounting member 111. The imaging core 12 is used for image detection and is electrically connected to the first electrical connector 13. The first mounting member 111 is used to mount the imaging core 12 and the first electrical connector 13, and the first mounting member 111 is rotatable relative to the first electrical connector 13 and the handle 2. After the imaging module 1 is moved close to the handle 2 and the first electrical connector 13 is in electrical contact with the second electrical connector 25, the first electrical connector 13 remains fixed relative to the handle 2 (in other words, relative to the second electrical connector 25 of the handle 2), and the first mounting member 111 can be rotated relative to the first electrical connector 13 and the handle 2 to fix the imaging module 1 to the handle 2. That is, during the rotation, the first electrical connector 13 is always in electrical contact with the second electrical connector 25. The first mounting member 111 facilitates the detachable mounting of the imaging core 12 to the handle 2, eliminating the need for a connecting structure on the imaging core 12 to cooperate with the handle 2. Referring to FIG. 6, the imaging core 12 specifically includes a lens 122 and a core body 121. The core body 121 is used to process the light captured by the lens 122 to generate image data and transmit it to the display 3 for displaying the image. The specific principle of image generation can refer to the conventional core body, which will not be repeated here. Specifically, the imaging module 1 further includes a focusing ring 123. The lens 122 is clamped by an inner wall face of the focusing ring 123. The focusing ring 123 is rotated to drive the lens 122 to rotate, so as to adjust a focal length of the lens 122. The first mounting member 111 is rotatable relative to the handle 2 to disassemble and assemble the handle 2 and the imaging module 1. The first mounting member 111 is detachably connected to the handle 2 through rotation, specifically through the rotational engagement described in the above embodiment or through a threaded connection as needed. The imaging core 12 and the first electrical connector 13 are rotatably arranged on the first mounting member 111. When the first mounting member 111 is mounted to the handle 2, the first mounting member 111 is axially moved close to the handle 2, so that the first electrical connector 13 is in electrical contact with the second electrical connector 25. After that, the first mounting member 111 is rotated to connect to the handle 2 while the imaging core 12 and the first electrical connector 13 do not rotate along with the first mounting member 111. Alternatively, the handle 2 is rotated, and the imaging core 12 and the first electrical connector 13 are rotated synchronously with the handle 2, while the first mounting member 111 does not rotate. That is, the handle 2 is rotated relative to the first mounting member 111 to achieve the connection. No matter the first mounting member 111 or the handle 2 is rotated as described above, the first electrical connector 13 can maintain its corresponding relationship with the second electrical connector 25. That is, when the first mounting member 111 rotates relative to the handle 2, the first electrical connector 13 remains aligned with the second electrical connector 25 in the circumferential direction. With the arrangement above, it is convenient to connect the first mounting member 111 to the handle 2, and the rotation operation does not affect the contact between the first electrical connector 13 and the second electrical connector 25. Therefore, the first electrical connector 13 and the second electrical connector 25 may have a small size while achieving a reliable electrical connection.

Specifically, the first mounting member 111 is connected to the handle 2 through a rotational engagement in the above embodiment. During mounting, the imaging module 1 is moved close to the handle 2, and the engagement block 115 is inserted into the engagement groove 27 from the first end of the engagement groove 27. Meanwhile, the first electrical connector 13 is in contact with the second electrical connector 25 to establish electrical conduction therebetween. After that, the first mounting member 111 is rotated, so that the engagement block 115 is rotated to the second end along the engagement groove 27 and engaged with the engagement groove 27, thereby achieving the connection between the imaging module 1 and the handle 2. In this process, the first electrical connector 13 remains stationary relative to the handle 2, which ensures reliable electrical contact between the first electrical connector 13 and the second electrical connector 25. The disassembly can be performed simply by a reverse operation, which will not be repeated here.

In some embodiments, referring to FIG. 4, FIG. 5, FIG. 11, and FIG. 12, the imaging module 1 further includes a second mounting member 112. The second mounting member 112 is rotatably arranged at the first mounting member 111, and the imaging core 12 is arranged at the second mounting member 112. That is, the imaging core 12 is rotatably connected to the first mounting member 111 through the second mounting member 112. The second mounting member 112 facilitates the mounting of the imaging core 12 without the need for a cooperative rotating structure on the imaging core 12.

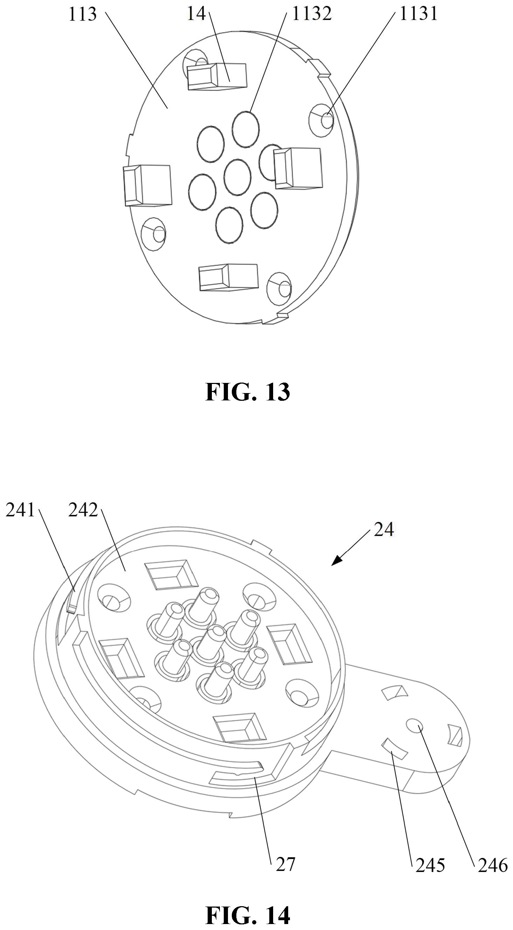

In some embodiments, referring to FIG. 4, FIG. 5 and FIG. 13, the imaging module 1 further includes a first connecting disc 113, which is fixed to the second mounting member 112. The first electrical connecting member 13 is arranged on the first connecting disc 113. That is, the first connecting disc 113 is provided for mounting of the first electrical connector 13. When multiple first electrical connectors 13 are provided, the first connecting disc 113 facilitates integral mounting of the first electrical connectors 13. Specifically, the first connecting disc 113 is provided with a contact hole 1132, and the first electrical connector 13 is configured as a contact located in the contact hole 1132. One end of the contact is configured to be in contact with the second electrical connector 25 of the handle 2 to transmit information and supply power, and the other end of the contact is connected to a connecting port 124 of the imaging core 12 through a ribbon cable.

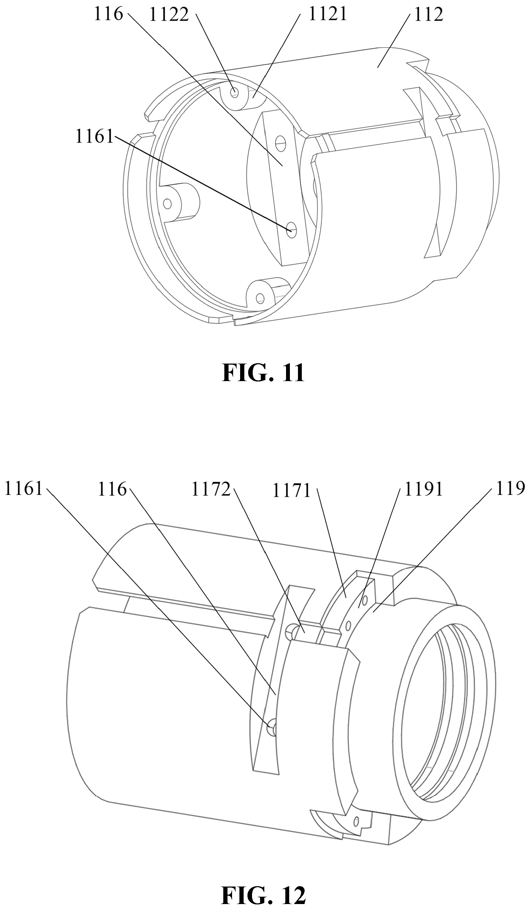

In some embodiments, referring to FIG. 11 to FIG. 13, an inner wall of the second mounting member 112 is provided with a protruding portion 1121. For example, a protruding portion 1121 is provided on an inner wall of a rear end of the second mounting member 112. An outer end face of the protruding portion 1121 is configured to be in contact with the first connecting disc 113 to limit the position of the first connecting disc 113. The protruding portion 1121 is provided with a bolt hole 1122. The first connecting disc 113 is provided with a fixing hole 1131 corresponding to the bolt hole 1122. The first connecting disc 113 is fixedly connected to the protruding portion 1121 through a bolt. By providing the protruding portion 1121, the axial position of the first connecting disc 113 is limited, which facilitates mounting. The first connecting disc 113 is connected to the second mounting member 112 through a bolt, and thus the disassembly is easy, and the connection is reliable.

In some embodiments, referring to FIG. 2 and FIG. 4, one of the first connecting disc 113 and the handle 2 is provided with a positioning pin 14, and the other is provided with a positioning hole 26. When the imaging module 1 is connected to the handle 2, the positioning pin 14 is configured to be inserted into the positioning hole 26 for circumferential position-limiting, so that the first electrical connector 13 and the handle 2 remain fixed relative to each other. The positioning pin 14 and the positioning hole 26 cooperate with each other to provide circumferential position limiting effect. In this way, when the first mounting member 111 is rotated for connection during disassembly and assembly, that is, when the first mounting member 111 is rotated relative to the handle 2, the first connecting disc 113 and the first electrical connector 13 thereon do not rotate along with the first mounting member 111. Alternatively, when the handle 2 is rotated during disassembly and assembly, the first connecting disc 113 and the first electrical connector 13 thereon rotate synchronously with the handle 2, and the first mounting member 111 does not rotate along with the handle 2, so that the connection is achieved by rotating the handle 2 relative to the first mounting member 111. It can be seen that the positioning pin 14 cooperates with the positioning hole 26 to achieve the circumferential position limiting, which ensures the electrical contact between the first electrical connector 13 and the second electrical connector 25.

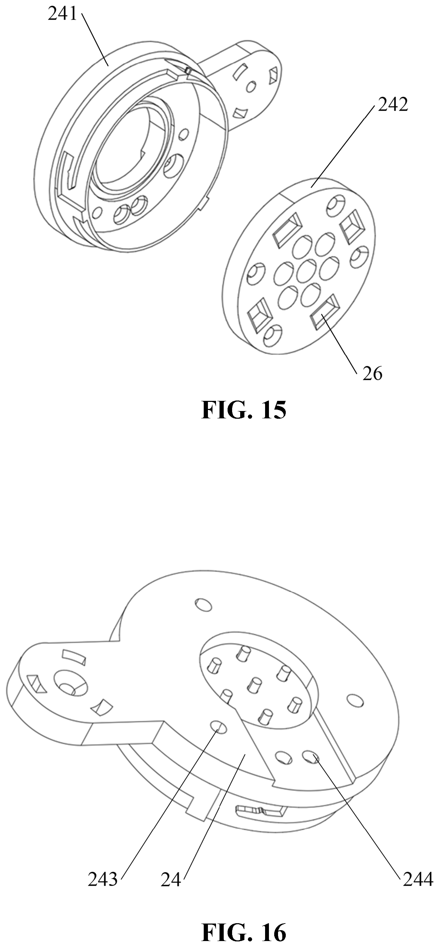

In some embodiments, referring to FIG. 2, and FIG. 14 to FIG. 16, the handle 2 is provided with a base 24. The base 24 includes a base body 241 and a second connecting disc 242. That is, the handle 2 includes a housing 23 and a base 24 provided on the housing 23. The imaging module 1 is detachably connected to the base body 241. The second connecting disc 242 is arranged on the base body 241, and the second electrical connector 25 is arranged on the second connecting disc 242. The provision of the base 24 not only facilitates mounting of the imaging module 1, but also facilitates the arrangement of the second electrical connector 25. In the case of multiple second electrical connectors 25, the second electrical connectors 25 can be integrally mounted. If the positioning pin 14 and the positioning hole 26 are provided, the positioning pin 14 or the positioning hole 26 is provided on the second connecting disc 242. Specifically, a fixing screw hole is provided in a cavity of the housing 23 and fastened to a base fixing hole 243 of the base body 241 through a bolt, so as to assemble the base 24 to the housing 23.

In some embodiments, the camera is an infrared camera, and the imaging module 1 is specifically an infrared imaging module. The handle 2 is further provided with a laser indicator 4 for laser indication. The base 24 has a first mounting position and a second mounting position. The first mounting position is used for mounting the infrared imaging module, and the second mounting position is used for mounting the laser indicator 4. Specifically, the first mounting position and the second mounting position are provided on one end face of the base 24. In the case that the infrared camera is provided with a mounting seat, the mounting seat may be arranged on the other end face of the base 24 opposite to the one end face. A mounting fixing hole 244 may be provided on the base to be connected with a mounting bolt. Specifically, the second mounting position is provided with a base positioning hole 245, which is mated with a positioning protrusion of the laser indicator 4 for positioning. The number of the base positioning hole 245 may be determined according to requirements. For example, multiple base positioning holes 245 may be provided. Specifically, the second mounting position is provided with a base threaded hole 246 to connect with the laser indicator 4 through a bolt. The second mounting position is parallel to a bottom face of the laser indicator 4 and is perpendicular to an optical axis of the base. An optical axis of the laser emitted by the laser indicator 4 is perpendicular to the bottom face of laser indicator 4, which ensures the parallelism between the optical axis of the laser and the optical axis of the infrared imaging module.

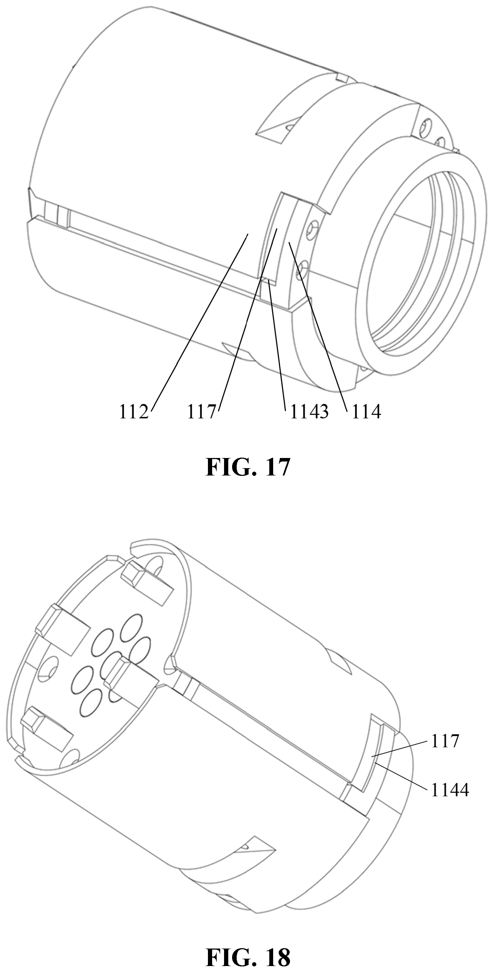

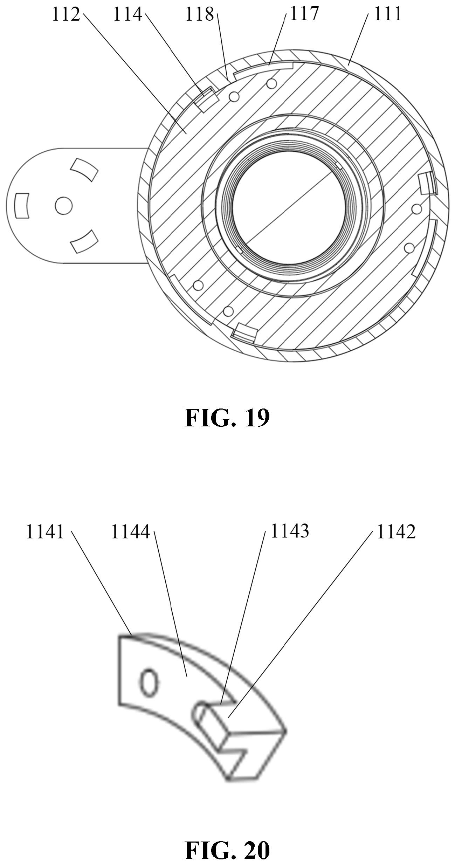

In some embodiments, referring to FIG. 17 to FIG. 20, the first mounting member 111 and the second mounting member 112 are both cylindrical. One of the first mounting member 111 and the second mounting member 112 is inserted in the other of the first mounting member 111 and the second mounting member 112. Specifically, the second mounting member 112 is inserted in the first mounting member 111 As such, the first mounting member 111 can further perform an external protection function while achieving the rotatable connection, and the imaging module 1 has a more regular overall shape.

Further, referring to FIG. 17 to FIG. 20 and FIG. 10, one of the first mounting member 111 and the second mounting member 112 is provided with a limiting groove 117 extending in the circumferential direction, and the other is provided with a limiting protrusion 118. The limiting protrusion 118 can be inserted into the limiting groove 117 for axial position limiting and is rotatable along the limiting groove 117. By the cooperation of the limiting groove 117 and the limiting protrusion 118, the first mounting member 111 and the second mounting member 112 can be rotatably connected to each other. That is, the first mounting member 111 and the second mounting member 112 cannot be separated in the axial direction, but can rotate relative to each other in the circumferential direction. Specifically, a length of the limiting groove 117 may be determined according to an angle that the first mounting member 111 is rotated relative to the handle 2 for connection.

In some embodiments, referring to FIG. 17 to FIG. 20, and FIG. 10 to FIG. 12, a first end of the limiting groove 117 extends to an edge of the first mounting member 111 or an edge of the second mounting member 112. The limiting protrusion 118 can be inserted into the limiting groove 117 from the first end of the limiting groove 117 to rotate along the limiting groove 117. The imaging module 1 further includes a cover plate 114, which is detachably connected to one of the first mounting member 111 and the second mounting member 112 that is provided with the limiting groove 117. The cover plate 114 is at least partially located in the first end of the limiting groove 117 to limit the limiting protrusion 118 within the limiting groove 117.

For ease of explanation, an example is taken in which the limiting groove 117 is provided on the second mounting member 112. The first end of the limiting groove 117 extends to the edge of the second mounting member 112, that is, the first end of the limiting groove 117 is open. This facilitates insertion of the limiting protrusion 118 into the limiting groove 117, and the overall structure is simple and reliable. Specifically, the first end of the limiting groove 117 may extend to an edge of one end of the second mounting member 112, which facilitates mounting of the first mounting member 111 in a corresponding direction. For example, the limiting groove 117 has an inverted L shape, where one side of the L shape extends in the circumferential direction, and the other side extends to the edge in the axial direction. The first end of the limiting groove 117 may extend to edges of both ends of the second mounting member 112, which facilitates mounting of the first mounting member 111 in both directions. That is, the limiting groove 117 includes a limiting portion 1171 and an avoidance portion 1172. The avoidance portion 1172 is provided at an end of the limiting portion 1171, and the avoidance portion 1172 corresponds to the first end of the limiting groove 117. The avoidance portion 1172 may extend to the edge of one end of the second mounting member 112. Alternatively, the avoidance portion 1172 may extend through the second mounting member 112, i.e., extend to the edges of both ends of the second mounting member 112. The cover plate 114 is detachably connected to the second mounting member 112 and is at least partially located in the first end of the limiting groove 117. That is, the first end of the limiting groove 117 is blocked by the cover plate 114. Specifically, the cover plate 114 is arranged in the avoidance portion 1172 to block the avoidance portion 1172, which prevents the limiting protrusion 118 from axially departing from the first end of the limiting groove 117. Therefore, the limiting protrusion 118 is reliably limited within the limiting portion 1171 of the limiting groove 117, so that the limiting protrusion 118 can only rotate in the circumferential direction along the limiting groove 117, and thus the first mounting member 111 is rotatably connected to the second mounting member 112. During disassembling, the cover plate 114 is first removed from the second mounting member 112, and thus the limiting protrusion 118 can be axially released from the first end of the limiting groove 117, thereby releasing the connection between the first mounting member 111 and the second mounting member 112. Therefore, with the arrangement above, the rotatable connection can be achieved, and the disassembly and assembly are easy. The imaging core 12 can be easily disassembled or replaced according to different shooting needs of the user or maintenance or upgrade needs of the imaging core 12. It can be understood that, in the case that the limiting groove 117 is provided on the first mounting member 111, the disassembly and assembly methods are the same as those described in the above embodiments, which will not be repeated here.

In some embodiments, a cover plate mounting groove 119 is provided on an end face of the first mounting member 111 or an end face of the second mounting member 112 that is provided with the limiting groove 117. The cover plate mounting groove 119 is in communication with the limiting groove 117 and has a depth greater than that of the limiting groove 117. For ease of explanation, an example is taken in which the limiting groove 117 is provided on the second mounting member 112. The end face of the second mounting member 112 is provided with a cover plate mounting groove 119. The cover plate mounting groove 119 is located adjacent to the limiting groove 117 in the axial direction of the second mounting member 112, and the cover plate mounting groove 119 is located on an outer side of the limiting groove 117. Specifically, the cover plate mounting groove 119 may extend to an edge of the second mounting member 112 to facilitate mounting of the cover plate 114. A depth of the cover plate mounting groove 119 is greater than that of the limiting groove 117, and thus a step surface 1191 is formed between the cover plate mounting groove 119 and the limiting groove 117. The step surface 1191 can position and support the cover plate 114 in the axial direction. The cover plate 114 includes a cover plate body 1141 and a cover plate protrusion 1142 provided on the cover plate body 1141. The cover plate body 1141 is arranged in the cover plate mounting groove 119. The cover plate protrusion 1142 is arranged in the first end of the limiting groove 117. An inner side wall 1143 of the cover plate protrusion 1142 is configured to circumferentially limit the limiting protrusion 118, and an end face 1144 of the cover plate body 1141 is configured to axially limit the limiting protrusion 118. Specifically, the cover plate protrusion 1142 is arranged in the avoidance portion 1172 of the limiting groove 117. The inner side wall 1143 of the cover plate protrusion 1142, i.e., an end face on a side of the cover plate protrusion 1142 facing the limiting portion 1171 of the limiting groove 117, is configured to abut against the limiting protrusion 118. That is, during the rotation of the limiting protrusion 118 in the limiting portion 1171 of the limiting groove 117, when the limiting protrusion 118 rotates to abut against the cover plate protrusion 1142, the limiting protrusion 118 is prevented from further rotating. When the limiting protrusion 118 rotates reversely to an end face of the second end of the limiting groove 117, the limiting protrusion 118 is also prevented from further rotating. That is, the limiting protrusion 118 is configured to rotate between the inner side wall 1143 of the cover plate protrusion 1142 and the end face of the second end of the limiting groove 117. The end face 1144 of the cover plate body 1141 is an end face at an end of the cover plate body 1141 that abuts against the step surface 1191. A part of the end face 1144 abuts against the step surface 1191, and another part of the end face 1144 is located outside the step surface 1191 so as to axially limit the limiting protrusion 118. That is, the limiting protrusion 118 is axially limited between the end face 1144 of the cover plate body 1141 and a wall surface of the limiting groove 117. Specifically, the cover plate 114 and the second mounting member 112 may be connected through a bolt. For example, a bolt hole is formed on the step surface 1191 and the cover plate 114 is fastened by a bolt.

During assembling, the imaging core 12 is first mounted to the second mounting member 112, and then the second mounting member 112 is assembled with the first mounting member 111 by insertion. When the limiting protrusion 118 enters the avoidance portion 1172 of the limiting groove 117 and moves axially along the avoidance portion 1172 until it faces the limiting portion 1171 of the limiting groove 117, the first mounting member 111 and the second mounting member 112 are rotated relative to each other, and thus the limiting protrusion 118 enters the limiting portion 1171. After that, the cover plate 114 is mounted in the cover plate mounting groove 119. Therefore, due to the limiting effect of the limiting portion 1171, the cover plate protrusion 1142, and the cover plate body 1141, the limiting protrusion 118 can only rotate within an enclosed cavity that is enclosed by the limiting portion 1171, the cover plate protrusion 1142, and the cover plate body 1141, and cannot be separated from the enclosed cavity, so that the first mounting member 111 and the second mounting member 112 are axially fastened.

With the arrangement above, it is convenient to disassemble and assemble the first mounting member 111 and the second mounting member 112 while achieving the rotatable connection therebetween. Further, the limiting protrusion 118 is first assembled into the limiting groove 117, and when the cover plate 114 is not yet mounted, the user can clearly observe the position of the limiting protrusion 118 in the limiting groove 117. After the limiting protrusion 118 is rotated into place, the cover plate 114 is mounted, which further facilitates the disassembly and assembly.

It can be understood that, in the case that the limiting groove 117 is provided on the first mounting member 111, the disassembly and assembly methods are the same as those described in the above embodiments, which will not be repeated here.

In other embodiments, the limiting protrusion 118 is elastically extendable and retractable. During mounting, the limiting protrusion 118 is retracted and moved to face the limiting groove 117, so that the limiting protrusion 118 can extend outward into the limiting groove 117 under the action of the elastic force.

The above embodiments mainly illustrate the detachable connection between the imaging module 1 and the handle 2. In some embodiments, referring to FIG. 4 and FIG. 5, the imaging module 1 includes a mounting assembly 11 and an imaging core 12. The mounting assembly 11 is used for detachably mounting the imaging core 12 and detachably connecting the imaging module 1 to the handle 2. A first electrical connector 13 is provided on the mounting assembly 11. When the imaging core 12 is mounted to the mounting assembly 11, the first electrical connector 13 is electrically connected to the imaging core 12. When the imaging module 1 is connected to the handle 2, the first electrical connector 13 is electrically connected to the handle 2, thereby achieving the electrical connection between the imaging core 12 and the handle 2. The mounting assembly 11 is detachably connected to the imaging core 12, and thus the imaging core 12 can be disassembled for maintenance or upgrade as needed, or can be replaced by other imaging cores 12 having different specifications or models. In addition, the mounting assembly 11 is provided with a first electrical connector 13. When the imaging core 12 is mounted to the mounting assembly 11, the imaging core 12 is electrically connected to the first electrical connector 13. Therefore, when the imaging module 1 is connected to the handle 2, the first electrical connector 13 is electrically connected to the handle 2, so that the imaging core 12 is electrically connected to the handle 2. By providing the first electrical connector 13, it is easy to achieve an electrical connection between the imaging core 12 and the handle 2 when the imaging core 12 is mounted to the mounting assembly 11. With the arrangement above, it is convenient to disassemble and assemble the imaging core 12, so that the imaging core 12 can be replaced by other imaging cores 12 having different specifications or models to meet different shooting needs, or the imaging core 12 can be easily disassembled and assembled to meet the maintenance or upgrade requirements of the imaging core 12.

Specifically, the mounting assembly 11 includes the first mounting member 111 and the second mounting member 112 as described above. The first mounting member 111 is detachably connected to the handle 2. The imaging core 12 is detachably mounted to the second mounting member 112. The first mounting member 111 is rotatable relative to the second mounting member 112.

In some embodiments, referring to FIG. 11 and FIG. 12, the imaging core 12 is arranged in the second mounting member 112. The inner wall of the second mounting member 112 is provided with a protruding positioning portion 116. An inner end face of the positioning portion 116 has the same shape as an outer peripheral surface of the imaging core 12 to fit with the outer peripheral surface of the imaging core 12. By providing the positioning portion 116 on the inner wall of the second mounting member 112, when mounting the imaging core 12, at least a part of the outer peripheral surface of the imaging core 12 fits with the inner end face of the positioning portion 116, thereby positioning the imaging core 12 and facilitating the mounting of the imaging core 12. The number of the positioning portion 116 may be determined as needed. For example, when the outer peripheral surface of the imaging core 12 includes multiple planes, the positioning portions 116 may be provided corresponding to two non-parallel planes among the multiple planes, respectively. Specifically, for example, the positioning portions 116 are provided corresponding to two opposite planes, so as to position the imaging core 12 in different directions. Specifically, a core body 121 of the imaging core 12 may include a portion in the shape of a quadrangular prism, and the positioning portions 116 are provided corresponding to two opposite side surfaces of the quadrangular prism for circumferential positioning of the imaging core 12.

In some embodiments, a side wall of the second mounting member 112 is partially recessed to form the positioning portion 116. That is, the positioning portion 116 and the second mounting member 112 are integrally formed, which is easy to form and does not require assembly. Specifically, the second mounting member 112 is partially recessed to form a groove on an outer wall of the second mounting member 112. A bottom face of the groove is the inner end face of the positioning portion 116. Two opposite side walls of the groove may be arranged in parallel to each other and perpendicular to the bottom face of the groove.

In other embodiments, the positioning portion 116 is provided separately from the second mounting member 112. Compared with the above embodiment in which the positioning portion 116 and the second mounting member 112 are integrally formed, the difference is that, in this embodiment, the positioning portion 116 and the second mounting member 112 are separately formed. The positioning portion 116 is connected to the inner wall of the second mounting member 112. Specifically, the positioning portion 116 is connected to the inner wall of the second mounting member 112 in conventional connecting manners.

Further, the second mounting member 112 can be detachably connected with positioning portions 116 of different sizes and/or shapes, so as to adapt to the imaging cores 12 of different sizes and/or shapes. That is, positioning portions 116 of different shapes may be provided according to the different shapes of the imaging cores 12. Alternatively, positioning portions 116 of different sizes may be provided according to the different sizes of the imaging cores 12. Alternatively, positioning portions 116 of different shapes and sizes may be provided to correspond to the imaging cores 12 of different shapes and sizes. All the positioning portions 116 can be detachably connected to the second mounting member 112. Therefore, when the user needs to replace the imaging core 12 with another one having a different shape or size, the imaging core 12 and the positioning portion 116 can be disassembled, and the suitable positioning portion 116 may be selected according to the shape or size of the needed imaging core 12 and mounted to the second mounting member 112. Then, the imaging core 12 is positioned by the positioning portion 116 and connected to the second mounting member 112. For example, for an imaging core 12 of a small size, a positioning portion 116 having a large thickness may be provided. For an imaging core 12 of a large size, a positioning portion 116 having a small thickness may be provided. Therefore, with the arrangement above, the second mounting member 112 of the same specification can easily adapt to the imaging cores 12 of different specifications, which makes it easy for the user to disassemble and assemble. In addition, during manufacturing, only one type of second mounting member 112 needs to be manufactured, which can correspond to imaging cores 12 of various specifications. There is no need to manufacture mounting members 112 of different specifications, which reduces costs.

In some embodiments, the imaging core 12 is detachably connected to the positioning portion 116, that is, the imaging core 12 is detachably connected to the second mounting member 112 through the positioning portion 116. In this way, the positioning unit 116 connects to the imaging core 12 while positioning the imaging core 12, which simplifies the structure. Specifically, a positioning bolt hole 1161 is formed on the positioning portion 116 and is configured to connect to a fastening threaded hole 125 of the imaging core 12 through a bolt. The number of the positioning bolt hole 1161 may be determined according to the strength requirement of the fixed connection. For example, each positioning portion 116 may be provided with two positioning bolt holes 1161. The size and position of the positioning bolt hole 1161 matches the size and position of the threaded hole of the body of the imaging core 12, so as to fasten the imaging core 12 in the second mounting member 112.

In other embodiments, the positioning portion 116 is provided with an engagement limiting structure to fix the imaging core 12 by engagement. That is, the imaging core 12 is fixed to the positioning portion 116 by snap fit, which can also facilitate the disassembly and assembly of the imaging core 12.

In the above embodiments, different positioning portions 116 are provided to adapt the second mounting member 112 for different imaging cores 12. In other embodiments, an adapter sleeve is provided corresponding to each imaging core 12. The adapter sleeve is configured to be arranged between the second mounting member 112 and the imaging core 12. The second mounting member 112 may be detachably connected to adapter sleeves having different inner cavity sizes and/or shapes, so as to adapt to imaging cores 12 of different sizes and/or shapes, while the adapter sleeves all have the same outer profile. That is, according to the different outer profiles of the imaging cores 12, adapter sleeves having inner cavities of different shapes may be provided. Alternatively, according to the different sizes of the imaging cores 12, adapter sleeves having inner cavities of different sizes may be provided. Alternatively, according to the imaging cores 12 having different profiles and sizes, adapter sleeves having inner cavities of different shapes and sizes may be provided. All the adapter sleeves have the same outer profile, that is, all the adapter sleeves have the same shape and size. All the adapter sleeves can be detachably connected to the second mounting member 112. When the user needs to replace with imaging cores 12 of different shapes or sizes, the imaging core 12 and the adapter sleeve are disassembled. According to the shape or size of the needed imaging core 12, a corresponding adapter sleeve is selected and sleeved over the imaging core 12 to form a whole. Then the adapter sleeve and the imaging core 12 as a whole are mounted to the second mounting member 112. With the arrangement above, the second mounting member 112 of the same specification can adapt to the imaging cores 12 of different specifications. In this embodiment, the inner wall of the second mounting member 112 may also be provided with the positioning portion 116, so that the inner end face of the positioning portion 116 is in contact with an outer peripheral surface of the adapter sleeve for positioning. In this way, the positioning portion 116 can adapt to the imaging cores 12 of different sizes without changing the size and position of the positioning portion 116, and thus it is convenient to replace the imaging core of the product with another one having a different specification.

In some embodiments, in order to axially position the imaging module 1, a flange is further provided on the inner wall of the second mounting member 112. The flange is configured to be in contact with an end face of the imaging core 12 for axial positioning. In a specific example, the flange is in contact with an end face of the core body 121 on which the lens 122 is provided for axial positioning.

In some embodiments, the imaging core 12 is provided with a connecting port 124, and the connecting port 124 is connected to the first electrical connector 13 through a cable. The connection through cable facilitates the cable arrangement inside the second mounting member 112. The position and layout of the cable can be easily adjusted based on an internal space of the second mounting member 112. Specifically, the connecting port 124 is provided with wiring terminals. One end of the first electrical connector 13 is connected to the wiring terminals through a ribbon cable. The other end of the first electrical connector 13 is electrically connected to the display 3 to transmit signals and supply power to the imaging core 12.

In some embodiments, the display 3 is movably arranged on the handle 2. The display 3 is movable between an unfolded state and a folded state. In the folded state, a screen of the display 3 is flush against the handle. In the unfolded state, the screen of the display 3 is moved away from the handle 2, and is rotated to face the user for easy observation. When the display 3 is in the folded state, the screen of display 3 is flush against the handle 2, making it easy to carry and providing protection for the screen of display 3. It can be understood that the screen is flush against the handle 2, which includes the case that a screen body that displays images, such as an LED (light-emitting diode) screen body, is flush against the handle 2, and also includes the case that a screen housing surrounding the screen body is flush against the handle 2. When the display 3 is in the unfolded state, the screen of the display 3 is disengaged from the handle 2 and is rotated to face the user for easy observation. Specifically, the screen may be rotated to have the same or opposite orientation relative to the lens of the imaging module 1, so that the user can easily observe the captured images through the display 3 when capturing front images or selfies.

In some embodiments, the handle 2 includes a mounting portion 21 and a gripping portion 22. The mounting portion 21 is arranged at a top end of the gripping portion 22. The imaging module 1 is detachably arranged at a front end of the mounting portion 21. The display 3 is arranged on a lateral side of the mounting portion 21. The gripping portion 22 is configured for the user to grip. It can be understood that the mounting member 21 and the gripping portion 22 may be an integral structure, or may be separate structures connected by conventional connecting means. The mounting portion 21 is used for mounting of the imaging module, and the specific structure of the mounting portion 21 can be determined according to the structure of the imaging module and the connecting manner between the mounting portion 21 and the imaging module, which is not specifically limited here. The mounting portion 21 is arranged at the top end of the gripping portion 22, and the imaging module is arranged at the front end of the mounting portion 21, that is, the imaging module is located at the front end of the top portion of the camera.

The various embodiments in this specification are described in a progressive manner, with each embodiment focusing on its differences from other embodiments. The same and similar parts among the various embodiments can be referred to each other.

The above description of the disclosed embodiments enables those skilled in the art to implement or use the present application. Various modifications to these embodiments will be apparent to those skilled in the art. The general principles defined herein can be implemented in other embodiments without departing from the spirit or scope of the present application. Therefore, the present application will not be limited to the embodiments shown herein, but should be defined by the widest scope consistent with the principles and novel features disclosed herein.

## Claims

1. A camera, comprising:
a handle (2) configured for a user to grip;
a display (3) arranged on the handle (2) and configured to display an image; and
an imaging module (1) detachably connected to the handle (2) and configured to capture an image, wherein
when the imaging module (1) is mounted to the handle (2), the imaging module (1) is electrically connected to the display (3) to allow the image captured by the imaging module (1) to be transmitted to the display (3) for displaying.

2. The camera according to claim 1, wherein
the imaging module (1) is provided with a first electrical connector (13), the handle (2) is provided with a second electrical connector (25), and the second electrical connector (25) is electrically connected to the display (3);
a position of the first electrical connector (13) corresponds to a position of the second electrical connector (25); and
when the imaging module (1) is mounted to the handle (2), the first electrical connector (13) is in electrical contact with the second electrical connector (25) to electrically connect the imaging module (1) to the display (3).

3. The camera according to claim 2, wherein
the imaging module (1) is provided with a connecting portion that is rotatable relative to the first electrical connector (13);
when the imaging module (1) is located close to the handle (2) and the first electrical connector (13) is in electrical contact with the second electrical connector (25), the first electrical connector (13) and the second electrical connector (25) remain fixed relative to each other, and the connecting portion is configured to rotate relative to the first electrical connector (13) and the handle (2) to detachably connect the imaging module (1) to the handle (2); and
the connecting portion is configured as an engagement portion or a thread that is configured to engage with the handle (2) to detachably connect the imaging module (1) to the handle (2) through engagement or threaded connection during rotation of the connecting portion.

4. The camera according to claim 3, wherein
the display (3) is located on a lateral side of the handle (2), the imaging module (1) is detachably arranged at a front end of a top portion of the handle (2), the first electrical connector (13) is arranged at a rear end of the imaging module (1) and is exposed, the second electrical connector (25) is arranged at the front end of the top portion of the handle (2) and is exposed, and the connecting portion is arranged at the rear end of the imaging module (1) and is located at a periphery of the first electrical connector (13).

5. The camera according to claim 2, wherein
one of the imaging module (1) and the handle (2) is provided with a positioning pin (14), and the other of the imaging module (1) and the handle (2) is provided with a positioning hole (26); and
when the imaging module (1) is connected to the handle (2), the positioning pin (14) is configured to be inserted into the positioning hole (26) for circumferential position limiting, so that the first electrical connector (13) and the handle (2) remain fixed relative to each other.

6. The camera according to claim 5, wherein the handle (2) is provided with a base (24), and the base (24) comprises:
a base body (241); and
a second connecting disc (242) arranged on the base body (241), wherein
the imaging module (1) is detachably connected to the base body (241); and
the second electrical connector (25) is arranged on the second connecting disc (242), and the positioning pin (14) or the positioning hole (26) is arranged on the second connecting disc (242).

7. The camera according to claim 1, wherein
one of the imaging module (1) and the handle (2) is provided with an engagement groove (27), and the other of the imaging module (1) and the handle (2) is provided with an engagement block (115) that is configured to engage with the engagement groove (27); and
the imaging module (1) is detachably connected to the handle (2) through engagement between the engagement groove (27) and the engagement block (115).

8. The camera according to claim 7, wherein
the engagement groove (27) is arranged in a circumferential direction of the imaging module (1) or the handle (2), a first end of the engagement groove (27) extends to an edge of the imaging module (1) or an edge of the handle (2), the engagement block (115) is configured to be inserted into the engagement groove (27) from the first end of the engagement groove (27) and rotate along the engagement groove (27) to a second end of the engagement groove (27) for engagement.

9. The camera according to claim 8, wherein
at least one of two opposite side walls of the second end of the engagement groove (27) is provided with a stop protrusion (271), and a distance between the stop protrusion (271) and an end face (272) of the second end of the engagement groove (27) is the same as a width of the engagement block (115) to prevent circumferential displacement of the engagement block (115); or
a size of the second end of the engagement groove (27) is smaller than a size of the first end of the engagement groove (27) to allow interference fit between the engagement groove (27) and the engagement block (115).

10. The camera according to claim 1, wherein the imaging module (1) comprises:
an imaging core (12) configured for image detection; and
a mounting assembly (11), wherein
the mounting assembly (11) is configured to detachably mount the imaging core (12) and detachably connect the imaging module (1) to the handle (2), and a first electrical connector (13) is provided on the mounting assembly (11);
when the imaging core (12) is mounted to the mounting assembly (11), the first electrical connector (13) is electrically connected to the imaging core 12; and
when the imaging module (1) is connected to the handle (2), the first electrical connector (13) is electrically connected to the handle (2).

11. The camera according to claim 10, wherein
the mounting assembly (11) comprises a first mounting member (111) and a second mounting member (112), the first mounting member (111) is detachably connected to the handle (2), the second mounting member (112) is configured to detachably mount the imaging core (12), and the first mounting member (111) is rotatable relative to the second mounting member (112).

12. The camera according to claim 11, wherein
the first mounting member (111) and the second mounting member (112) are both cylindrical, and one of the first mounting member (111) and the second mounting member (112) is inserted in the other of the second mounting member (112) and the first mounting member (111); and
one of the first mounting member (111) and the second mounting member (112) is provided with a limiting groove (117) arranged in a circumferential direction, the other of the first mounting member (111) and the second mounting member (112) is provided with a limiting protrusion (118), and the limiting protrusion (118) is configured to be inserted into the limiting groove (117) for axial position limiting and is rotatable in the circumferential direction along the limiting groove (117).

13. The camera according to claim 12, wherein
a first end of the limiting groove (117) extends to an edge of the first mounting member (111) or an edge of the second mounting member (112), and the limiting protrusion (118) is configured to be inserted into the limiting groove (117) from the first end of the limiting groove (117) and rotate along the limiting groove (117); and
the mounting assembly further comprises a cover plate (114), the cover plate (114) is detachably connected to one of the first mounting member (111) and the second mounting member (112) that is provided with the limiting groove (117), and the cover plate (114) is at least partially located within the first end of the limiting groove (117) to limit the limiting protrusion (118) within the limiting groove (117).

14. The camera according to claim 13, wherein
a cover plate mounting groove (119) is provided on an end face of one of the first mounting member (111) or the second mounting member (112) that is provided with the limiting groove (117), the cover plate mounting groove (119) is in communication with the limiting groove (117), and a depth of the cover plate mounting groove (119) is greater than a depth of the limiting groove (117);
the cover plate (114) comprises a cover plate body (1141) and a cover plate protrusion (1142) provided on the cover plate body (1141), the cover plate body (1141) is arranged in the cover plate mounting groove (119), and the cover plate protrusion (1142) is arranged in the limiting groove (117); and
an inner side wall (1143) of the cover plate protrusion (1142) is configured to circumferentially limit the limiting protrusion (118), and an end face (1144) of the cover plate body (1141) is configured to axially limit the limiting protrusion (118).

15. The camera according to claim 11, wherein
the mounting assembly (11) further comprises a first connecting disc (113), the first connecting disc (113) is fixed to the second mounting member (112), and the first electrical connector (13) is arranged on the first connecting disc (113).

16. The camera according to any one of claims 1 to 9, wherein
the display (3) is movably arranged on the handle (2), and the display (3) is movable between an unfolded state and a folded state, wherein
in the folded state, a screen of the display (3) is flush against the handle (2); and
in the unfolded state, the screen of the display (3) is disengaged from the handle (2) and is configured to rotate to face the user for observation.

17. The camera according to any one of claims 1 to 9, wherein
the handle (2) comprises a mounting portion (21) and a gripping portion (22), the mounting portion (21) is arranged at a top end of the gripping portion (22), the imaging module (1) is detachably connected to a front end of the mounting portion (21), the display (3) is located on a lateral side of the mounting portion (21), and the gripping portion (22) is configured for the user to grip.
